# NEW EUROPEAN PATENT SPECIFICATION

(11) **EP 0 669 369 B2**
(45) Date of publication and mention of the opposition decision: **12.01.2011**
(45) Mention of the grant of the patent: 06.05.1999
(21) Application number: 94830082.7
(22) Date of filing: 24.02.1994
(51) Int. Cl.: C08L 3/02, C08J 9/00

(54) **Process for making biodegradable packaging products**
Verfahren zur Herstellung von biologisch abbaubare Verpackungsmaterialen
Procédé pour la fabrication de materiaux d'emballage biodégradables

(43) Date of publication of application: 30.08.1995
(73) Proprietor: OBTUSA INVESTIMENTOS E GESTAO LIMIDADA, 9000 Funchal, Madeira (PT)
(72) Inventor: Romano, Giovanni, I-21013 Gallarate (Varese) (IT); Carcano, Cesare, B-1030 Bruxelles (BE); Bait, Dario, I-31030 Castello Di Godego (Treviso) (IT); Virtucio, Luisito, I-35015 Galliera Veneta (Padova) (IT); Cama, Enrica, I-31010 Mareno Di Piave (Treviso) (IT); Simioni, Ugo, I-35015 Fontaniva (Padova) (IT)
(74) Representative: Pistolesi, Roberto

(56) References cited:
- EP-A- 0 376 201
- EP-A- 0 409 783
- EP-A- 0 474 095
- EP-A1- 0 087 847
- EP-A1- 0 474 095
- EP-A2- 0 282 451
- WO-A1-92/08759
- WO-A1-92/18325
- DATABASE WPI Week 9312, Derwent Publications Ltd., London, GB; AN 96843, XP002988524 & JP 5 039 377 A (SANWA DENPUN KOGYO KK) 19 February 1993
- Carbohydrate Research Vol.245 (19.07.93), no.2, pages 289-302

## Description

### Field of the invention

The present invention relates to a process for the production of low-density expanded shaped products, such as, for instance, sheets or filler elements for packing.

In the following description and the subsequent claims, the expression: low-density expanded products, means a product having a porous, cellular structure whose bulk density does not exceed 40 g/l.

The expression: Filler element, means instead a small size element, having preferably a low bulk density and a variable shape, for instance, parallelepipedal, spherical, cylindrical, helicoid, etc.

As is known, in the field of packing materials the need is increasingly felt of realizing non polluting products, fully biodegradable or biodisintegrable, suitable to replace the utilization of non biodegradable plastic materials, such as, for instance, expanded polystyrene, in order to eliminate or at least reduce the severe environmental problem constituted by the disposal of such products.

### Prior art

To this purpose, a lot of attempts have been made trying to realize packing materials having structural and mechanical characteristics as similar as possible to those of conventional plastic materials, obtained however starting from organic substances easily disintegrable once dispersed in the environment.

For instance, in the European Patent applications EP-A-O 375 831 and EP-A-O 376 201 filed by the National Starch and Chemical Corporation, a starch-based expanded biodegradable product is described having an amylose content of at least 45%, preferably higher than 65% in weight on the total weight of the starch, to be utilized as packing material of various shape and size instead of expanded polystyrene.

The packing product obtained starting from a starch-based high amylose-content composition, besides avoiding environmental impact problems being totally biodegradable, has a specific weight as well as characteristics of flexibility, resilience and compressibility fully comparable to those required of the known packing materials, such as for instance expanded polystyrene.

Advantageous as it is from many aspects, the aforementioned product has however many drawbacks, which shall be stressed hereunder.

A first drawback arises from the need of utilizing, to obtain a material having satisfactory mechanical properties, a relatively expensive starting product such high amylose-content starch, obtainable from hybrid vegetable varieties or by modification of native starch.

A second drawback is associated to the hydrophilic character of the end product, which degradates rapidly in the presence of humidity. In other words, this product has unavoidable to be stored in a dry environment and is subjected to a reduction in volume with the passing of time, which is incompatible with its utilization as a filler and protection element in packings.

As a consequence, the biodegradable product described in the aforementioned patent applications, while being very interesting ecologically, is an expensive material and lacks those characteristics of inalterability in the long run which are required of packing products.

To overcome to some extent these drawbacks, the International Patent application WO.A-9308014 filed by Bio-products International proposes the realization of biodegradable filler elements obtained by extrusion starting from a starch-based composition to which a weak acid in an amount comprised between 0,2% and 7% in weight on the total weight of the composition, and a carbonate comprised between 0,1% and 2% in weight on the total weight of the composition are added.

In this case, the starch is constituted by native starch, raw and non modified, for instance potato or maize starch, with a low amylose content.

The addition of a weak acid, which causes a controlled break in the complex molecules of amylose and amylopectin contained in the starch, and the addition of a foaming agent such as the carbonate, have allowed to obtain an extruded end product which has satisfactory properties of flexibility, resilience and compressibility, without having to utilize high amylose-content starch, reducing therefore markedly the costs of the starting composition.

Though being consistent with the object, also this filler element is not free from drawbacks.

Actually, the biodegradable product obtained by extrusion starting from the aforementioned composition, is still prone to degrade quickly in the presence of humidity because of the hydrophilic character of starch, which limits its utilization with the passing of time.

Besides, the weak acid may cause during the step of breaking of starch molecules an excessive fragmentation of the molecular structure of the amylose, giving rise, during the subsequent step of extrusion of the mixture, to the so-called phenomena of starch "overcooking", with a marked reduction in the mechanical characteristics of the end product.

Starch-based compositions for the realization of biodegradable products are also described in WO-A-9218325, WO-A-9208759 and EP-A-0 282 451.

### Summary of the invention

The problem which is at the basis of the present invention is that of providing a starch-based composition which permits to obtain low-cost products substantially fully biodegradable and harmless for the environment, having structural and mechanical characteristics comparable to those of expanded polystyrene, and durable in the time even in the presence of humidity.

The above problem is solved, according to the invention, by the use of a composition of the aforementioned type, comprising in weight parts on the total weight thereof:
- starch, in an amount comprised between 96% and 99% in weight, said starch incorporating an amount of amylose comprised between 18% and 43% in weight on the total weight thereof;
- a weak acid or hydrochloric acid in an amount comprised between 0,2 and 2% in weight;
- a lipid in an amount comprised between 0,5% and 2% in weight which may be a vegetable oil chosen among the group comprising : peanut oil, maize oil, palm oil, and mixtures thereof;
- wherein the starch and the lipid are premixed before the addition of the weak acid or hydrochloric acid
Thanks to the particular combination of the above described components, the composition advantageously allows to obtain a substantially fully biodegradable product, capable to keep with the passing of time its mechanical characteristics, such as, for instance, flexibility, resilience and compressibility, as well as its external shape.

Because of the above advantageous features, the biodegradable product obtained according to this invention is especially suitable for the utilization, in the form of a sheet or a filler element, as a packing material.

### Detailed description of the invention

The process of the present invention comprises advantageously three low-cost elements commonly found on the market.

The first component is a starch, preferably a common starch chosen among the group comprising: corn starch, leguminous plants starch, tuber starch, and mixtures thereof.

Common starch means here a non modified partly refined starch, generally extracted from corns, leguminous plants, or tubers.

As examples of common starches utilizable in the process according to the invention one can mention maize, soya, potato and manioc starches.

Alternatively, also a native starch can be utilized (non refined raw starch), or a starch extracted from dried fruit or other vegetable foods.

The starch has generally an amylose content comprised between 18% and 43% in weight on the total weight thereof.

Starch is preferably in a granular, floury form. The humidity degree of starch is the one of the floury aliments which are usually found on the market, i.e. it does not exceed 21% in weight compared to the weight of dry starch, completely free of humidity.

Particularly satisfactory results have been achieved when the amylose content of starch is comprised between 24% and 36% in weight on the total weight thereof.

The second component is advantageously constituted by at least a weak acid, preferably chosen among the group comprising: malic acid, citric acid, maleic acid, succinic acid, acetic acid, and mixtures thereof.

In the following of the description and the subsequent claims, the expression: weak acid, means an acid which dissociates only partly in an aqueous solution.

While organic acids, in particular those of the di-, or tricarboxylic type, are preferred, the utilization of an inorganic acid such as hydrochloric acid is not excluded from the present invention.

This second component allows a chemical dextrinization of the starch molecules.

In the following of the description and the subsequent claims, the expression: dextrinization, means the process of breaking up the amylose and amylopectin chains into dextrins, fractions thereof with a lower molecular weight.

This dextrinization treatment is necessary to obtain, starting from a composition based on low amylose-content starch, an end product having the good structural and mechanical characteristics that are required of a packing material.

The chemical dextrinization of starch is caused to happen by the hydrolytic activity of the weak acid, which breaks up in a controlled manner the long chains of starch, in particular the branched chains of amylopectin, fractionating them into dextrins.

The concentration of the weak acid is advantageously comprised between 0,2% and 2% and preferably between 0,5% and 1,0% in weight on the total weight of the composition.

It has been actually observed that by amounts lower than 0,2% in weight, the starch molecules are unsatisfactorily dextrinized. By quantities exceeding 2% in weight, the hydrolytic activity of the acid on the starch molecules causes on the contrary an excessive dextrinization thereof, which may lead during the extrusion step to the so-called starch "overcooking" phenomena, which reduce the mechanical characteristics of the end product.

An optimum starch dextrinization degree has been reached by utilizing a concentration of weak acid comprised between 0,5% and 1,0% in weight on the total weight of the composition.

The weak acid is preferably used in granular form, to be easily mixable with the starch flour.

According to a further feature of this invention, the third component is constituted by at least a lipid in an amount comprised between 0,5% and 2% in weight on the total weight of the composition.

In the following of the description and the subsequent claims, the expression: lipid, means a complex lipid chosen among the group comprising: acylglycerols or glycerides, phospholipids, glycolipids, waxes, sterols, and mixtures thereof.

To the purposes of the invention, among the glycerides the preferred ones are constituted by fats, such as for instance butter and lard, and oils.

The lipid is advantageously added to the composition in a fluid form, and a vegetable oil is preferably utilized, chosen among the group comprising: peanut oil, maize oil, palm oil, and mixtures thereof.

Especially satisfactory results have been reached with a lipid amount comprised between 0,5% and 1,5% in weight on the total weight of the composition.

Thanks to the presence of a lipid in the composition, it has been found that the above cited phenomena of starch "overcooking", due to an excessive dextrinization of amylose, are substantially avoided. Moreover, it allows to obtain a shaped biodegradable damp-proof product which keeps also in the long run its structural and mechanical characteristics.

In particular, the lipid is thought to react with the amylose molecules, forming with the latter a complex whose nature has not yet been well ascertained, which protects the amylose molecules against the hydrolytic attack by the acid, preventing both their excessive dextrinization and a subsequent re-crystallization of starch with formation of a rigid branched structure.

This last feature is critical if one wishes to obtain a product capable of keeping for a long time its mechanical properties, preventing as much as possible the onset of phenomena of hardening and friability of the product due to a progressive crystallization of starch.

A further effect which is thought to be due to this lipid/amylose complex, which has been found in the product obtained with the process according to the invention, is the presence on the external surface of such product of a substantially damp-proof film, which prevents the penetration of humidity into the inside and therefore its degradation.

The biodegradable product advantageously obtainable by a so defined composition has proved to be not only little expensive and provided with good structural and mechanical characteristics, as is required of packing materials of known types, such as for instance expanded polystyrene, but also capable of keeping these properties and its shape in the long run, resisting to the hydrolytic attack of humidity.

The process object of the present invention may be therefore advantageously utilized for the production of biodegradable products and in particular for the production of expanded shaped products having a low bulk density, such as for instance sheets or filler elements for packing.

According to the invention, the process is provided for the production of a biodegradable low-density expanded shaped product having a bulk density comprised between 10 and 40 g/l, a resilience of at least 30%, and a compressibility comprised between 0,02 and 0,20 kN, comprising the following steps:
- mixing of 96-99 parts in weight of a starch with 0,2-2 parts of at least a weak acid or hydrochloric acid and 0,5-2 parts of at least a lipid, thus obtaining an homogeneous mixture, said starch incorporating an amount of amylose comprised between 18% and 43% in weight on the total weight thereof;
- submitting said mixture to gelation by mechanical working in an extrusion chamber of an extrusion device at a pre-established pressure;
- extruding said gel-like mixture through an especially shaped die, obtaining a low-density expanded product.

Starch and oil are mixed to one another before the addition of the acid component, so as to protect the amylose chain from the hydrolytic attack by the latter.

In a special and advantageous embodiment of this process, the starch, the weak acid and the lipid are mixed for about thirty minutes in a conventional flour-mixer, until an homogeneous mixture is obtained.

The so obtained mixture is then introduced at ambient temperature in the inlet chamber of an extruder, preferably a twin screw extruder of the TT58/15 type produced by Pavan Mapimpianti Spa.

The mixture is caused to move forward into the extrusion chamber where it undergoes a mechanical working which transforms it into a gel-like state.

Thanks to the presence of an acid, assisted by mechanical forces exercised on the mixture by the extrusion screws, the starch is submitted to the above described dextrinization process.

The gelation step of the mixture takes place advantageously in an extrusion chamber divided into five steps having temperatures of 25, 25, 90, 115 and 140°C respectively and a pressure of 100 bar.

The gel-like mixture comes out of the extruder at a pressure and temperature of 100-120 bar and 145-150°C respectively.

Coming out of the extrusion die said mixture undergoes an expansion due to the instantaneous evaporation of the humidity contained therein. The evaporation is due to the pressure and temperature difference between the inside and the outside of the extruder and confers a low-density cellular structure to the end product.

The so obtained expanded product may then be thermo-moulded to achieve the final wished shape, for instance: container, sheet, cylinder, sphere, helix, disk, etc.

Depending on its shape and flexibility, resilience and compressibility characteristics, the end product is suitable to be utilized in the most different fields, such as, for instance, the field of packing (as protective filler or covering material) and the field of disposable containers.

The product obtained according to the above described process has a bulk density comprised between 10 and 40 g/l, a resiliency of at least 30%, and a compressibility comprised between 0,02 and 0,20 kN.

The aforementioned values of bulk density, resiliency and compressibility have been measured by the following methods.

### Bulk density

Bulk density is assessed by filling to its maximal capacity a one liter container with the product and weighting it. The measurement is repeated ten times for each product sample. The value is calculated by finding average of the measurements and is expressed in g/l.

### Compressibility

Compressibility is defined as the force necessary to deform a material, and is assessed by utilizing an Instron texturometer. The product is randomly introduced into a cylindrical container of 88 mm of height (Instron outfit), which is caused to move at a speed of 50 mm/min until it reaches a height which corresponds exactly to half the height of the cylinder. The force necessary to the compression is always observed in correspondence of the maximal compression degree. A high value indicates that the sample is rather hard and little compressible, requiring a greater compression force to reduce its volume relatively to a sample which requires a lower force to change its volume analogously. The compression force is expressed in kilonewtons (kN). The compressibility value is calculated by finding the average of three measurements.

### Resilience

Resilience is defined as the capacity of a material of resuming its original shape after having been deformed by a force and is measured after the determination of the compressibility by means of an Instrom texturometer of the aforementioned type. After having been compressed by the piston up to half the height of the cylinder which contains it, the product is kept compressed for thirty seconds and then released. After a minute, the return height of the product is measured, The resilience is calculated as percent, by multiplying by hundred the difference between the return height and the total shifting travelled by the piston and dividing by the total shifting distance. A high return percent corresponds to a sample which has a good resilience.

Examples of biodegradable products obtained with the process according to the invention are described in the following.

### Example I

The biodegradable product has been obtained through the above described extrusion process, starting from a starch-based composition having the following formulation (weight percents on the total weight)
- starch 98,7% (amylose content: 43%);
- citric acid 0,8%
- palm oil 0,5%

The product, which we shall call sample A, has a 12 g/l bulk density, a 55% resiliency and a 0,040 kN compressibility.

### Example II

The biodegradable product has been obtained through the above described extrusion process, starting from a starch-based composition having the following formulation (weight percent on the total weight):
- starch 98,0% (amylose content: 32%)
- citric acid 0,5%
- palm oil 0,7%

The product, which we shall call sample B, has a 18 g/l bulk density, a 47% resiliency and a 0,070 kN compressibility.

### Example III

The biodegradable product has been obtained through the above described extrusion process, starting from a starch-based composition having the following formulation (weight percent on the total weight):
- starch 98,7% (amylose content 24%)
- citric acid 0,3%
- palm oil 1,0%

The product, which we shall call sample C, has a 21 g/l bulk density, a 41% resiliency and a 0,088 kN compressibility.

The attached figures show two diagrams which illustrate the different behavior in an room saturated with steam, of a product realized starting from the composition according to the invention and of a similar product, obtained from a composition without the lipid component.

The product according to the invention corresponds to sample B of the above described example II, while the product without the lipid component, which we shall call B', has been obtained with the same starting composition as sample B without the addition of oil.

Samples B and B' have been realized in a substantially cylindrical shape.

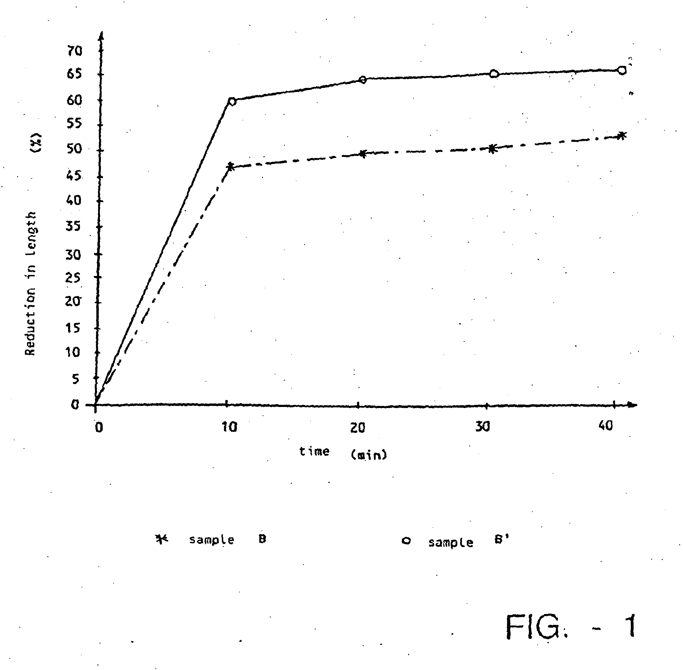

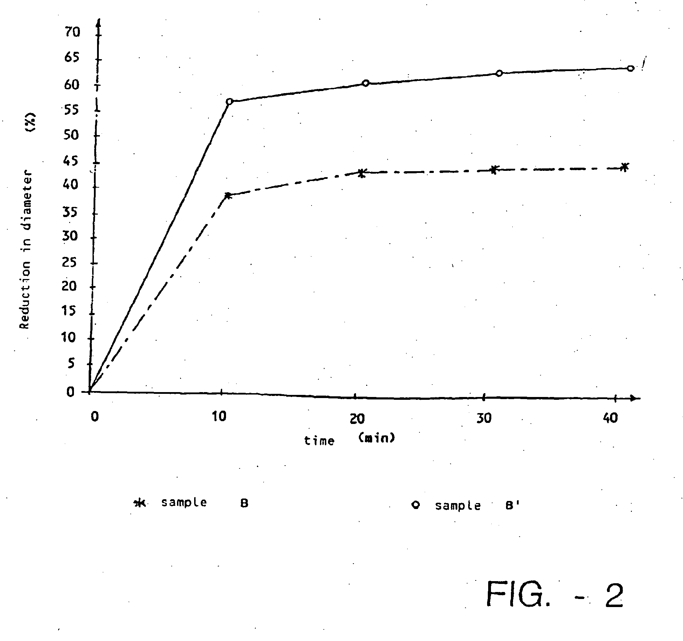

Figure 1 represents the percent reduction in the length of the biodegradable product with the passing of time, while figure 2 is the percent reduction in the diameter.

The above disclosure clearly stresses the numerous advantages reached by the starch-based composition according to the present invention:
- possibility of realizing biodegradable products, such as for instance sheets of filler elements for packing;
- low cost;
- good structural and mechanical characteristics of the product obtained;
- capacity of keeping the shape and mechanical properties constant with the passing of time, resisting the hydrolytic attack of humidity.

## Claims

1. Process for the production of a biodegradable low-density expanded shaped product having a bulk density comprised between 10 and 40 g/l, a resiliency of at least 30% and a compressibility comprised between 0.02 and 0.2 kN, comprising the steps of:
- mixing 96-99 parts in weight of a starch with 0.2-2 parts of at least a weak acid or hydrochloric acid and 0.5-2 parts of at least a lipid, thus obtaining an homogeneous mixture, said starch incorporating an amount of amylose comprised between 18% and 43% in weight on the total weight thereof;
- submitting to gelation said mixture by means of mechanical working in an extrusion chamber of an extrusion device at a pre-established pressure;
- extruding said gel-like mixture through a die of a pre-fixed shape, thus obtaining a low-density expanded product;
**characterized in that** it also comprises the preliminary step of premixing said starch with said at least one lipid, before the addition of said at least a weak acid or hydrochloric acid.

2. Process according to claim 1, **characterized in that** the starch is a common starch chosen among the group comprising: corn starch, leguminous plants starch, tubers, and mixtures thereof.

3. Process according to claim 1, **characterized in that** the amylose content of said starch is comprised between 24% and 36% in weight on the total weight thereof.

4. Process according to claim 1, **characterized in that** said at least a weak acid is comprised in an amount between 0.5% and 1% in weight.

5. Process according to claim 1, **characterized in that** said at least one weak acid is an acid chosen among the group comprising: malic acid, tartaric acid, citric acid, maleic acid, succinic acid, acetic acid, and mixtures thereof.

6. Process according to claim 1, **characterized in that** said at least one lipid is comprised in an amount between 0.5% and 1.5% in weight.

7. Process according to claim 1, **characterized in that** said at least one lipid is a vegetable oil chosen among the group consisting of: peanut oil, maize oil, palm oil, and mixtures thereof.

## Patentansprüche

1. Verfahren für die Herstellung eines biologisch abbaubaren geschäumten geformten Produkts mit geringer Dichte, das eine Schüttdichte, die zwischen 10 und 40 g/l liegt, eine Elastizität von wenigstens 30 % und eine Zusammendrückbarkeit, die zwischen 0,02 und 0,2 kN liegt, hat, umfassend die Schritte:
- Mischen von 96-99 Gewichtsteilen einer Stärke mit 0,2-2 Teilen wenigstens einer schwachen Säure oder Salzsäure und 0,5-2 Teilen wenigstens eines Lipids unter Erhalt eines homogenen Gemisches, wobei die Stärke eine Menge von Amylose, die zwischen 18 und 43 Gewiehts-%, bezogen auf das Gesamtgewicht derselben, umfasst, einbringt;
- Unterwerfen des Gemisches einer Gelierung mittels einer mechanischen Bearbeitung in einer Extrudierkammer einer Extrudiervorrichtung bei einem vorbestimmten Druck;
- Extrudieren des gelartigen Gemisches durch eine Düse einer vorgegebenen Form unter Erhalt eines geschäumten Produkts mit niedriger Dichte,
**dadurch gekennzeichnet, dass** es auch den vorausgehenden Schritt des Vormischens der Stärke mit dem wenigstens einen Lipid vor Zusatz der wenigstens einen schwachen Säure oder Salzsäure umfasst.

2. Verfahren nach Anspruch 1, **dadurch gekennzeichnet, dass** die Stärke eine übliche Stärke ist, die aus der Gruppe, umfassend Maisstärke, Stärke von Leguminosen-Pflanzen, Knollen und Gemischen davon, ausgewählt ist.

3. Verfahren nach Anspruch 1, **dadurch gekennzeichnet, dass** der Amylosegehalt der Stärke zwischen 24 und 36 Gewichts-% des Gesamtgewichts derselben liegt.

4. Verfahren nach Anspruch 1, **dadurch gekennzeichnet, dass** die wenigstens eine schwache Säure in einer Menge von zwischen 0,5 und 1 Gewichts-% enthalten ist.

5. Verfahren nach Anspruch 1, **dadurch gekennzeichnet, dass** die wenigstens eine schwache Säure eine Säure ist, die aus der Gruppe, umfassend Äpfelsäure, Weinsäure, Citronensäure, Maleinsäure, Bernsteinsäure, Essigsäure und Gemische davon, ausgewählt wird.

6. Verfahren nach Anspruch 1, **dadurch gekennzeichnet, dass** das wenigstens eine Lipid in einer Menge von zwischen 0,5 und 1,5 Gewichts-% enthalten ist.

7. Verfahren nach Anspruch 1, **dadurch gekennzeichnet, dass** das wenigstens eine Lipid ein pflanzliches Öl ist, das aus der Gruppe, bestehend aus Erdnussöl, Maisöl. Palmöl und Gemischen davon, ausgewählt wird.

## Revendications

1. Procédé de production d'un produit façonné expansé de basse densité biodégradable ayant une masse volumique apparente comprise entre 10 et 40 g/l, une résilience d'au moins 30 % et une compressibilité comprise entre 0,02 et 0,2 kN, comprenant les étapes consistant à :
- mélanger 96-99 parties en poids d'un amidon avec 0,2-2 parties en poids d'au moins un acide faible ou acide chlorhydrique et 0,5-2 parties d'au moins un lipide, ce qui permet d'obtenir un mélange homogène, ledit amidon intégrant une quantité d'amylose comprise entre 18 % et 43 % en poids par rapport au poids total de celui-ci ;
- soumettre à la gélification ledit mélange au moyen d'un travail mécanique dans une chambre d'extrusion d'un dispositif d'extrusion à une pression prédéterminée ;
- extruder ledit mélange de type gel à travers une filière d'une forme prédéterminée, ce qui permet d'obtenir un produit expansé de basse densité ;
**caractérisé en ce qu'**il comprend également l'étape préliminaire consistant à prémélanger ledit amidon avec ledit au moins un lipide, avant l'ajout dudit au moins un acide faible ou acide chlorhydrique.

2. Procédé selon la revendication 1, **caractérisé en ce que** l'amidon est un amidon courant choisi dans le groupe constitué par : amidon de maïs, amidon de légumineuses, tubercules et mélanges de ceux-ci.

3. Procédé selon la revendication 1, **caractérisé en ce que** la teneur en amylose dudit amidon est comprise entre 24 % et 36 % en poids par rapport au poids total de celui-ci.

4. Procédé selon la revendication 1, **caractérisé en ce que** ledit au moins un acide faible est compris dans une quantité comprise entre 0,5 % et 1 % en poids.

5. Procédé selon la revendication 1, **caractérisé en ce que** ledit au moins un acide faible est un acide choisi dans le groupe constitué par : acide malique, acide tartarique, acide citrique, acide maléique, acide succinique, acide acétique et mélanges de ceux-ci.

6. Procédé selon la revendication 1, **caractérisé en ce que** ledit au moins un lipide est compris dans une quantité comprise entre 0,5 % et 1,5 % en poids.

7. Procédé selon la revendication 1, **caractérisé en ce que** ledit au moins un lipide est une huile végétale choisie dans le groupe constitué par : huile d'arachide, huile de maïs, huile de palme et mélanges de celles-ci.
